# FASCICULE DE BREVET EUROPEEN

(11) **EP 1 211 945 B1**
(45) Date de publication et mention de la délivrance du brevet: **02.03.2005**
(21) Numéro de dépôt: 00964299.2
(22) Date de dépôt: 15.09.2000
(51) Int. Cl.: A23B 4/023, A23L 1/314, A23L 1/315, A23L 1/318

(54) **PRODUIT CUIT DE VIANDE ET PROCEDE POUR SA PREPARATION**
GEKOCHTES FLEISCHPRODUKT UND VERFAHREN ZUR HERSTELLUNG
COOKED MEAT PRODUCT AND METHOD FOR PREPARING SAME

(30) Priorité: 17.09.1999 FR 9911680
(43) Date de publication de la demande: 12.06.2002
(73) Titulaire: Rollier, Claude, 75015 Paris (FR)
(72) Inventeur: Rollier, Claude, 75015 Paris (FR)
(74) Mandataire: Nargolwalla, Cyra
(86) Numéro de dépôt international: PCT/FR2000/002567
(87) Numéro de publication internationale: WO 2001/021003

(56) Documents cités:
- EP-A- 0 354 262
- EP-A- 0 743 011
- EP-A- 0 962 149
- WO-A-82/00239
- FR-A- 2 634 976
- US-A- 5 415 883
- PATENT ABSTRACTS OF JAPAN vol. 011, no. 132 (C-417), 24 avril 1987 (1987-04-24) & JP 61 268156 A (SEIWA KASEI KK), 27 novembre 1986 (1986-11-27)
- PATENT ABSTRACTS OF JAPAN vol. 1995, no. 01, 28 février 1995 (1995-02-28) & JP 06 292536 A (SHOJI SAKEGAWA), 21 octobre 1994 (1994-10-21)
- DATABASE WPI Section Ch, Week 199726 Derwent Publications Ltd., London, GB; Class D12, AN 1997-281443 XP002154977 & CN 1 102 309 A (SIMEI FOOD FACTORY JINGJIANG COUNTY), 10 mai 1995 (1995-05-10)

## Description

La présente invention concerne un produit cuit de porc ou de volaille traité en salaison caractérisé par le fait qu'il est libre d'agents conservateurs sous la forme de nitrates ou de nitrites.

Elle concerne également un procédé pour la préparation de ces produits.

Les produits cuits de porc et de volaille, traités en salaison, visés par la présente invention sont choisis dans le groupe comprenant notamment le jambon et l'épaule de porc, le jambon de volaille, en particulier de dinde ou de poulet, les rôtis cuits de porc, de dinde et de dindonneau.

Les produits cuits de porc et de volaille selon la présente invention sont traités en salaison d'une manière telle que la solution de saumurage classique est remplacée par une solution contenant un alcool de qualité alimentaire, du sel de table, et éventuellement d'autres ingrédients pouvant faire partie de la saumure tel que les sucres, les arômes, les antioxydants etc., mais ne contenant aucun agent conservateur sous la forme de nitrates ou de nitrites.

Dans le contexte de la présente demande de brevet, on entend par « agent conservateur » toute substance qui prolonge la durée de conservation des denrées alimentaires en les protégeant des altérations dues aux micro-organismes. Cette définition est reprise du Code des usages de la charcuterie, Edition 1997, page 2, 359.

Le demandeur est déjà titulaire d'une demande de brevet européen, déposée le 28 mai 1998 sous le n° 98 401 278, qui décrit un procédé pour la préparation de produits carnés mettant en oeuvre une étape de saumurage.

Ce procédé est caractérisé par le fait que l'eau de saumurage est substituée, en partie ou dans sa totalité, par de l'alcool de qualité alimentaire. Il permet l'obtention de produits carnés qui présentent des qualités organoleptiques améliorées, tout en maintenant leur coloration ainsi que leurs propriétés de conservation et leur tenue à la coupe.

Cependant, cette demande de brevet précise que la saumure, ou solution de saumurage, est constituée d'eau additionnée de sel nitrité, d'antioxydants, d'agents conservateurs, de sucres et d'arômes.

Le procédé décrit dans cette demande de brevet conduit toujours à des produits contenant des nitrites, puisque la solution de saumurage en contient, même si l'eau elle-même est remplacée par un alcool de qualité alimentaire.

L'utilisation de sels d'acide nitrique comme agents de conservation pour la viande est connu de très longue date. L'addition du nitrate de potassium, connu sous le nom de salpêtre, aux viandes est extrêmement ancienne. En effet, des écrits dévoilent que son utilisation était courante au Moyen Age.

Le nitrate est réduit en nitrite sous l'action de nitrates réductases produites par des microbes naturellement présents dans la viande.

L'effet anti-bactérien des nitrites est intéressant du fait qu'il s'exerce sur un grand nombre de germes bactériens. Les nitrites bloquent surtout la croissance du bacille botulique, un microbe très courant qui produit une toxine mortelle.

Ceci étant, les nitrites présentent une toxicité aussi bien directe qu'indirecte.

En ce qui concerne leur toxicité directe, ils transforment la myoglobine et l'hémoglobine humaine en metmyoglobine et methémoglobine, bloquant ainsi leurs possibilités de transporter l'oxygène à travers le corps humain.

Pour ce qui est de leur toxicité indirecte, ils peuvent réagir sur des amines, provenant de la dégradation des protéines, pour former des nitrosamines. Les nitrosamines sont toxiques, cancérigènes et mutagènes.

Ainsi, l'utilisation des nitrates/nitrites en tant qu'agents conservateurs dans les produits carnés, notamment en les incluant dans la solution de saumurage, souffre d'un inconvénient majeur qui est la toxicité de ces produits.

Or, le demandeur, de façon surprenante et inattendue, a découvert à travers les nombreux travaux et recherches qu'il a menés en ce qui concerne la préparation des produits carnés en salaison, qu'il était possible d'obtenir un produit traité en salaison entièrement satisfaisant au niveau de sa conservation en remplaçant la solution de saumurage essentiellement par un mélange de sel de table et d'un alcool de qualité alimentaire, ceci sans qu'aucun agent conservateur à base de nitrates ou de nitrites soit présent, agent qui se trouverait normalement présent dans une solution de saumurage classique.

Le contrôle bactérien dans les produits selon l'invention est en fait assuré par la présence d'alcool fixé dans la chair du produit cuit de porc ou de volaille au saumurage. Le produit est conservé après cuisson en poche sous vide, sans qu'il soit nécessaire d'utiliser des nitrates ou nitrites. Il s'ensuit qu'il n'y a pas de risque de développement de sous-produits toxiques, du type décrit ci-dessus, dans le produit.

Les produits cuits, traités en salaison, de porc ou de volaille selon l'invention sont libres de tout agent conservateur sous la forme de nitrates ou de nitrites et représentent donc un réel progrès en matière de sécurité alimentaire pour les consommateurs.

L'alcool de qualité alimentaire est choisi dans le groupe comprenant les vins et les spiritueux ainsi que leurs mélanges.

La quantité d'alcool contenu dans les produits dépend de celle utilisée dans la solution de saumurage. Elle est détectable par les méthodes d'analyse chimique et de détection de l'alcool éthylique bien connues de l'homme du métier.

Bien entendu, le produit selon l'invention peut également contenir d'autres ingrédients habituellement présents dans une solution de saumurage classique tels que les sucres, les arômes, les antioxydants etc.

Les sucres sont choisis dans le groupe comprenant notamment le glucose, le saccharose, les dextrines, ou leurs mélanges.

Les arômes sont choisis en fonction du goût final que l'homme du métier souhaite conférer au produit cuit de porc ou de volaille.

Les antioxydants sont choisis dans le groupe comprenant les antioxydants de qualité alimentaire et notamment l'acide ascorbique ou ses sels.

On peut également ajouter à la solution de saumurage d'autres produits de qualité alimentaire utilisés dans les saumures, tels que notamment des agents stabilisants de texture, tels que des gommes, et des fixateurs d'arômes, tels que le glutamate, ou leurs mélanges.

Le procédé de préparation du produit cuit, traité en salaison, de porc ou de volaille selon l'invention est caractérisé par le fait que, lors de l'étape de saumurage, on remplace la solution de saumurage par une solution constituée par un alcool de qualité alimentaire, de sel de table et éventuellement d'autres ingrédients pouvant faire partie d'une solution de saumurage classique, mais sans l'ajout d'agents conservateurs sous forme de nitrates ou de nitrites.

Selon un mode de réalisation préféré de l'invention, le procédé consiste en la réalisation des étapes suivantes :
- découpe et désossage des pièces de viande,
- injection sous pression d'une solution de saumurage contenant un alcool de qualité alimentaire, du sel de table et éventuellement d'autres ingrédients tels que les sucres et les arômes, mais ne contenant aucun agent conservateur sous la forme de nitrates ou de nitrites,
- poursuite de l'imprégnation de la solution de saumurage dans les pièces de viande par malaxage dans une baratte sous vide,
- mise en forme des pièces de viande dans des poches sous vide,
- cuisson et,
- refroidissement.

L'invention concerne également une solution de saumurage pour produits de boucherie et charcuterie, caractérisée par le fait qu'elle contient un alcool de qualité alimentaire, du sel de table et éventuellement d'autres ingrédients tels que les sucres et les arômes, et qu'elle est exempte de tout agent conservateur sous la forme de nitrates ou de nitrites.

L'invention pourra être mieux comprise à l'aide des exemples qui suivent, qui sont donnés à titre purement illustratif.

### EXEMPLE 1 : PREPARATION D'UNE SOLUTION DE SAUMURAGE SELON L'INVENTION

On prépare une solution de saumurage en mélangeant les ingrédients suivants :

| | |
|---|---|
| vin blanc à 11° | 30 kg |
| PHS | 0,3 kg |
| Bouquet 400 | 2,4 kg |
| Glutonic V 10 | 4,8 kg |
| Acide ascorbique | 0,315 kg |
| sel de table | 4,5 kg |

PHS est un polyphosphate de sodium, Bouquet 400 est un mélange d'arômes, et Glutonic V 10 est un mélange de dextrose et de sel de table. Ces produits sont tous commercialisés par la Société JEAGER.

### EXEMPLE 2 : PREPARATION DE JAMBON DE PORC CUIT A L'AIDE DE LA SOLUTION DE SAUMURAGE PREPAREE A L'EXEMPLE 1

On découpe et on désosse un jambon de porc. Puis on injecte directement dans le jambon désossé, sous pression, avec des aiguilles creuses, la solution de saumurage préparée à l'exemple 1 à raison de 15 kg de saumure par 100 kg de viande. On poursuit l'imprégnation de la saumure dans une baratte rotative sous vide à une température comprise entre 4 et 6°C pendant 14 à 18 heures.

On vidange la baratte et on met les pièces de jambon dans des poches en plastique, puis dans un moule pour qu'elles prennent forme.

On met les pièces de viande sous vide, puis on les cuit dans un four à vapeur humide avec une montée en température par paliers, afin d'atteindre une température à coeur de 65°C. La durée totale de la cuisson est comprise entre 14 et 18 heures.

On retire ensuite les pièces de jambon du four et on les place pendant 24 heures dans un local de refroidissement rapide dans lequel la température est réglée entre 2 et 4°C.

On les stocke ensuite dans un local réfrigéré à une température entre 2 et 4°C.

On obtient ainsi un jambon cuit ayant le goût du vin blanc, ayant des qualités de conservation allongée qui traduisent sa stabilisation vis à vis des germes bactériens.

## Revendications

1. Procédé pour la préparation de produits cuits, traités en salaison, de porc ou de volaille choisis dans le groupe comprenant notamment le jambon et l'épaule de porc, le jambon de volaille, en particulier de dinde ou de poulet, les rôtis cuits de porc, de dinde et de dindonneau, mettant en oeuvre une étape de saumurage, **caractérisé par le fait que** la solution de saumurage classique est remplacée par une solution contenant un alcool de qualité alimentaire, du sel de table et éventuellement d'autres ingrédients tels que les sucres et les arômes, mais ne contenant aucun agent conservateur sous la forme de nitrates ou de nitrites, ladite solution étant injectée sous pression dans le produit et ledit produit étant mis dans des poches sous vide avant cuisson.

2. Procédé selon la revendication 1, **caractérisé par le fait qu'**il consiste en la réalisation des étapes suivantes :
- découpe et désossage des pièces de viande ;
- injection sous pression d'une solution de saumurage contenant un alcool de qualité alimentaire, du sel de table et éventuellement d'autres ingrédients tels que les sucres et les arômes, mais ne contenant aucun agent conservateur sous la forme de nitrates ou de nitrites ;
- poursuite de l'imprégnation de la solution de saumurage dans les pièces de viande par malaxage dans une baratte sous vide ;
- mise en forme des pièces de viande dans des poches sous vide ;
- cuisson ;
- refroidissement.

3. Produit cuit, traité en salaison, de porc ou de volaille choisis dans le groupe comprenant notamment le jambon et l'épaule de porc, le jambon de volaille, en particulier de dinde ou de poulet, les rôtis cuits de porc, de dinde et de dindonneau, susceptible d'être obtenu selon le procédé de la revendication 1 ou 2, **caractérisé par le fait qu'**il contient de l'alcool de qualité alimentaire et qu'il est libre de tout agent conservateur sous la forme de nitrates ou de nitrites.

4. Produit cuit selon la revendication 3, **caractérisé par le fait que** l'alcool est choisi dans le groupe comprenant les vins et les spiritueux ainsi que leurs mélanges.

5. Produit cuit selon la revendication 3 ou 4, **caractérisé par le fait qu'**il contient en outre des arômes, des sucres ou d'autres ingrédients d'une solution de saumurage classique.

## Claims

1. A method for preparing salt-treated, cooked pork or poultry product, chosen from the group comprising notably pork leg and shoulder, poultry legs, particularly turkey or chicken legs, pork, turkey and turkey poult cooked roasts, said process having a pickling step, **characterized in that** the conventional pickling solution is replaced with a solution containing food-grade alcohol, table salt, and, optionally, other ingredients such as sugars and flavorings, but containing no preservative in the form or nitrates or nitrites, said solution being injected under pressure in the product, and said product being packed into vacuum bags before cooking.

2. The method according to claim 1, **characterized in that** it consists in carrying out the following steps:
- cutting and boning the pieces of meat;
- injecting under pressure a pickling solution containing a food-grade alcohol, table salt and, optionally, other ingredients such as sugars and flavorings, but containing no preservative in the form or nitrates or nitrites;
- continuing the impregnation of the pieces of meat with the pickling solution by mixing in a vacuum churn;
- forming the pieces of meat in vacuum bags;
- cooking; and
- cooling.

3. Salt-treated, cooked pork or poultry product, chosen from the group comprising notably pork leg and shoulder, poultry legs, particularly turkey or chicken legs, pork, turkey and turkey poult cooked roasts, obtainable according to the method of either claim 1 or claim 2, **characterized by** the fact that it contains food-grade alcohol and that it is free of any preservative in the form of nitrates or nitrites.

4. Cooked product according to claim 3, **characterized by** the fact that the alcohol is chosen from the group comprising wines and spirits, and mixtures thereof.

5. Cooked product according to either claim 3 or claim 4, **characterized by** the fact that it furthermore contains flavorings, sugars or other ingredients of a conventional pickling solution.

## Patentansprüche

1. Verfahren zur Herstellung von gekochten Produkten, welche gepökelt sind, aus Schwein oder Geflügel, gewählt aus der Gruppe, die insbesondere Schweineschinken oder -schulter, Geflügelschinken, insbesondere von Pute oder Huhn, gekochte Braten von Schwein, Pute oder junger Pute enthält, bei welchem ein Schritt des Pökelns stattfindet, **dadurch gekennzeichnet, dass** die herkömmliche Salzlakelösung ersetzt wird durch eine Lösung, welche einen Alkohol von Nahrungsmittelqualität, Tafelsalz und gegebenenfalls andere Zutaten wie zum Beispiel Zucker und Aromastoffe enthält, aber keine Konservierungsmittel in Form von Nitraten oder Nitriten enthält, wobei die L ösung unter D ruck in das Produkt e ingespritzt wird und das Produkt vor dem Kochen in Taschen unter Vakuum gepackt wird.

2. Verfahren gemäß Anspruch 1, **dadurch gekennzeichnet, dass** es in der Durchführung der folgenden Schritte besteht:
- Schneiden und Ablösen von Fleischstücken vom Knochen;
- Einspritzen unter Druck einer Pökellösung, welche einen Alkohol von Nahrungsmittelqualität, Tafelsalz und gegebenenfalls andere Zutaten wie zum Beispiel Zucker und Aromastoffe enthält, aber keine Konservierungsmittel in Form von Nitraten oder Nitriten enthält;
- weiteres Durchtränken der Fleischstücke mit der Pökellösung durch Kneten in einem Knetapparat unter Vakuum;
- Formung der Fleischstücke in Taschen unter Vakuum;
- Kochen;
- Kühlen.

3. Gekochtes Produkt, welches gepökelt ist, aus Schwein oder Geflügel, gewählt aus der Gruppe, die insbesondere Schweineschinken oder -schulter, Geflügelschinken, insbesondere von Pute oder Huhn, gekochte Braten von Schwein, Pute oder junger Pute enthält, welches dazu geeignet ist, durch das Verfahren gemäß Anspruch 1 oder 2 erhalten zu werden, **dadurch gekennzeichnet, dass** es den Alkohol von Nahrungsmittelqualität enthält und es frei von Konservierungsstoffen in Form von Nitraten oder Nitriten ist.

4. Gekochtes Produkt gemäß Anspruch 3, **dadurch gekennzeichnet, dass** der Alkohol aus der Gruppe gewählt ist, die Weine und Spirituosen sowie deren Mischungen enthält.

5. Gekochtes Produkt gemäß Anspruch 3 oder 4, **dadurch gekennzeichnet, dass** es des weiteren Aromastoffe, Zucker oder andere Zutaten einer herkömmlichen Pökellösung enthält.
